# EUROPÄISCHE PATENTSCHRIFT

(11) **EP 1 397 886 B1**
(45) Veröffentlichungstag und Bekanntmachung des Hinweises auf die Patenterteilung: **02.06.2010**
(21) Anmeldenummer: 02751002.3
(22) Anmeldetag: 04.06.2002
(51) Int. Cl.: H04L 9/32, G07F 7/08, H03K 3/84

(54) **AUTHENTIFIKATION MITTELS EINES CHALLENGE-RESPONSE-VERFAHRENS**
AUTHENTICATION BY MEANS OF A CHALLENGE-RESPONSE METHOD
AUTHENTIFICATION SELON UN PROCEDE CHALLENGE-RESPONSE

(30) Priorität: 21.06.2001 DE 10130099
(43) Veröffentlichungstag der Anmeldung: 17.03.2004
(73) Patentinhaber: Infineon Technologies AG, 85579 Neubiberg (DE)
(72) Erfinder: GAIL, Markus, 81547 München (DE); HESS, Erwin, 85521 Ottobrunn (DE); POCKRANDT, Wolfgang, 85293 Reichertshausen (DE); WEDEL, Armin, 86415 Mering (DE)
(74) Vertreter: Zinkler, Franz
(86) Internationale Anmeldenummer: PCT/EP2002/006148
(87) Internationale Veröffentlichungsnummer: WO 2003/001735

(56) Entgegenhaltungen:
- EP-A- 0 570 828
- EP-A- 0 616 429
- EP-A- 0 624 839
- WO-A-00/18061

## Beschreibung

Die vorliegende Erfindung bezieht sich auf das Gebiet einer Authentifikation und spezieller auf das Gebiet einer Authentifikation mittels eines Challenge-Response-Verfahrens.

Die stetig zunehmende Verwendung von Chipkarten auf vielen Gebieten des täglichen Lebens erfordert, daß bei Anwendungen derselben eine Echtheit der Karte überprüft wird, um eine Verwendung von Kopien oder illegalen Karten zu verhindern. Beispiele solcher Anwendungen umfassen Telefonkarten oder Chipkarten zur Durchführung von Geldtransaktionen, Sicherheitschecks bei Firmen usw.

Ein hohes Maß an Sicherheit bezüglich der Echtheit einer derartigen Karte kann durch geheime Schlüssel, wie beispielsweise kryptographische Algorithmen, erreicht werden. Typischerweise wird die Echtheit der Karte bestätigt, indem der geheime Schlüssel verwendet wird, um aus einem Challenge-Signal eines Terminals, das beispielsweise eine Zufallszahl sein kann, die von dem Terminal ausgegeben wird, mit dem kryptographischen Algorithmus ein Response-Signal zu berechnen. Das Response-Signal wird zu dem Terminal übertragen, wo es bezüglich seiner Korrektheit überprüft wird. Eine Möglichkeit das Response-Signal aus dem Challenge-Signal zu erzeugen, besteht darin, Daten, die auf der Karte gespeichert sind, wie z.B. Personalisierdaten, in die Berechnung des Response-Signals mit einzubeziehen.

Das oben genannte Verfahren, welches ein Challenge-Response-Verfahren darstellt, ist, sofern sich die auf der Karte gespeicherten Daten nicht verändern, aufgrund der Tatsache nachteilig, daß bei einem identischen Challenge-Signal und einem unveränderten Karteninhalt stets das gleiche Response-Signal erzeugt wird. Dieser identische und deterministische Ablauf erleichtert einem Angreifer differentielle Analysen und Manipulationen am Algorithmus-Processing und ein Auslesen des Schlüssels aus dem Kartenspeicher. Um eine sichere Authentifikation zu ermöglichen, muß daher die Möglichkeit einer identischen Wiederholung vermieden werden.

Eine Möglichkeit, einen identischen Ablauf einer Authentifikation bei einem stets gleichen Challenge-Signal zu vermeiden, kann durch eine Modifikation interner Kartendaten erreicht werden. Die Datenmodifikation kann durch eine Anwendung oder einen zusätzlichen Mechanismus einer Datenvariabilität sichergestellt werden. Eine mögliche Realisierung einer Datenvariabilität besteht darin, einen Zähler nach dem Abacus-Prinzip vor jeder Authentifikation obligatorisch zu dekrementieren.

Die EP 0570828 B1 offenbart eine Datenträgeranordnung, die eine Steuerlogik mit einer Zähllogik und einer Freigabelogik aufweist. Die Steuerlogik ist mit einem nichtflüchtigen Speicher gekoppelt. Die Datenträgeranordnung umfaßt ferner eine Koppelstufe, die mit dem nichtflüchtigen Speicher bzw. dem Freigabezähler verbunden ist, um Daten derselben zu dem Rechenwerk zu liefern. Das Rechenwerk, das ein rückgekoppeltes Schieberegister aufweisen kann, berechnet unter Verwendung der Daten aus dem nichtflüchtigen Speicher und Daten einer Datenein/ausgabevorrichtung, die als Challenge-Signal gesendet werden, ein Response-Signal.

Die EP 0570828 A zeigt ein System, bei dem eine Datenträgeranordnung über eine Datenaustauschverbindung mit einer Dateneingabe/-ausgabevorrichtung verbunden ist. Die Datenträgeranordnung hat einen Speicher, einen Freigabezähler, eine Koppelstufe, die mit dem Speicher und dem Freigabezähler verbunden ist, sowie ein Rechenwerk, das mit der Koppelstufe verschaltet ist. Eine aktuelle Anzahl von Werteinheiten, die der Datenträgeranordnung zugeordnet ist, wird in dem Speicher gespeichert und mit jedem Challenge-Response-Vorgang um einen bestimmten Wert vermindert. Ein Challenge-Signal wird in das Rechenwerk eingegeben, wobei eine Echtheitsprüfung ansprechend auf ein Freigabesignal des Freigabezählers basierend auf den gespeicherten Werteinheiten in das Rechenwerk eingegeben wird und eine Datendurchmischung durchgeführt wird, um ein Response-Ausgabesignal zu erzeugen. Das Rechenwerk umfasst eine rückgekoppelte Schieberegistereinrichtung, die zu Beginn eines Rechenvorgangs mit Daten geladen wird, die die in dem Speicher gespeicherten Werteinheiten und Daten umfassen, die von der Dateneingabe/-ausgabevorrichtung als ein Challenge-Signal gesendet wird.

Die EP 0616429 A zeigt eine Schaltungsanordnung zum Erzeugen einer Pseudo-Zufallsfolge mittels eines rückgekoppelten Schieberegisters. Im Betrieb wird ein Zustand des Schieberegisters mit einer vordefinierten Voreinstellung festgelegt, was beispielsweise mit Unterbrechung der Rückkopplung über eine Eingabe einer Geheiminformation erfolgen kann. Daraufhin wird ein Eingangssignal, das aus einer Geheiminformation, einer Zufallszahl oder Zufallsinformationen bestehen kann, in das rückgekoppelte Schieberegister eingegeben und über eine Verknüpfungslogik mit einer Rückkopplungsinformation am Ausgang eines letzten Gatters verknüpft, so dass eine Pseudo-Zufallsfolge erzeugt wird.

Die Aufgabe der vorliegenden Erfindung besteht darin, ein verbessertes Konzept zur Authentifikation zu schaffen.

Diese Aufgabe wird durch eine Vorrichtung gemäß Anspruch 1, ein System gemäß Anspruch 11 und Verfahren gemäß den Ansprüchen 12 und 13 gelöst.

Die vorliegende Erfindung basiert auf der Erkenntnis, daß bei einem Authentifikationssystem eine verbesserte Sicherheit durch eine Datenvariabilität erhalten wird, bei der ein Zustand, der einem aktuellen Challenge-Response-Vorgang zugeordnet ist, rückkopplungsmäßig aus einem alten Zustand erzeugt wird, der einem vorhergehenden Challenge-Response-Vorgang zugeordnet ist, wobei der Zustand, der dem aktuellen Challenge-Response-Vorgang zugeordnet ist, verwendet wird, um aus einem Challenge-Signal ein Response-Signal zu berechnen.

Ein Vorteil der vorliegenden Erfindung besteht darin, daß ein Page-Register, das bei vielen Speichern vorhanden ist, mit einem abschaltbaren Rückkoppeleingang versehen werden kann, um ein rückgekoppeltes Schieberegister zum Erzeugen des durch eine Rückkopplung erzeugten Werts zu bilden, wodurch der Schaltungsaufbau einfach gehalten ist.

Ein weiterer Vorteil der vorliegenden Erfindung besteht darin, daß die Modifikation eines Datenwerts, der zur Berechnung eines Response-Signals verwendet wird, auf eine pseudo-zufällige Weise durchgeführt wird.

Ferner besteht ein weiterer Vorteil der vorliegenden Erfindung darin, daß für ein rückgekoppeltes Schieberegister der Länge N bei einer Modifikation während einer Authentifikation im Mittel N/2 Bits verändert werden.

Zusätzlich kann gemäß der vorliegenden Erfindung eine Authentifikationsfreigabe nach einer vorbestimmten Anzahl von Authentifikationen gesperrt werden, so daß einem Betrüger lediglich eine eingeschränkte Anzahl von Versuchen zur Verfügung steht, ohne daß ein Implementieren einer zusätzlichen Zählvorrichtung erforderlich ist.

Ein bevorzugtes Ausführungsbeispiel der vorliegenden Erfindung weist eine Chipkarte auf, die einen Eingang zum Empfangen eines Challenge-Signals und einen Ausgang zum Senden eines Response-Signals aufweist. Ferner umfaßt die Chipkarte ein rückgekoppeltes Schieberegister, das mit einem nichtflüchtigen Speicher und einem Rechenwerk gekoppelt ist. Bei dem bevorzugten Ausführungsbeispiel wird in einem rückgekoppelten Schieberegister ansprechend auf ein Challenge-Signal aus einem alten Schieberegisterzustand, der einem vorhergehenden Challenge-Vorgang zugeordnet ist, ein neuer Schieberegisterzustand erhalten. Der neue Schieberegisterzustand wird in einen nichtflüchtigen Speicher geschrieben und ferner an ein Rechenwerk übertragen, das aus einem Challenge-Signal, das an dem Eingang empfangen wird, und dem Schieberegisterzustand ein Response-Signal erzeugt, das über den Ausgang übertragen wird.

Bei einem weiteren Ausführungsbeispiel umfaßt die Chipkarte einen zusätzlichen nichtflüchtigen Speicher, der einen geheimen Schlüssel und/oder andere Daten, wie beispielsweise Personalisierdaten oder Applikationsdaten, enthält. Bei diesem Ausführungsbeispiel berechnet das Rechenwerk das Response-Signal aus dem geheimen Schlüssel und/oder anderen Daten, die in dem der Chipkarte gespeichert sind, zusammen mit einem Zustand des Schieberegisters und des Challenge-Signals.

Vorzugsweise ist das rückgekoppelte Schieberegister durch ein Page-Register implementiert, das mit einem abschaltbaren Rückkoppeleingang versehen ist.

Weiterbildungen der vorliegenden Erfindung sind in den abhängigen Ansprüchen dargelegt.

Nachfolgend werden bezugnehmend auf die beiliegenden Zeichnungen bevorzugte Ausführungsbeispiel der vorliegenden Erfindung näher erläutert. Es zeigen:
- Fig. 1: ein Blockschaltbild eines Ausführungsbeispiels ei- ner Challenge-Response-Vorrichtung gemäß der vor- liegenden Erfindung; und
- Fig. 2: ein Blockschaltbild eines weiteren Ausführungsbei- spiels einer Challenge-Response-Vorrichtung gemäß der vorliegenden Erfindung.

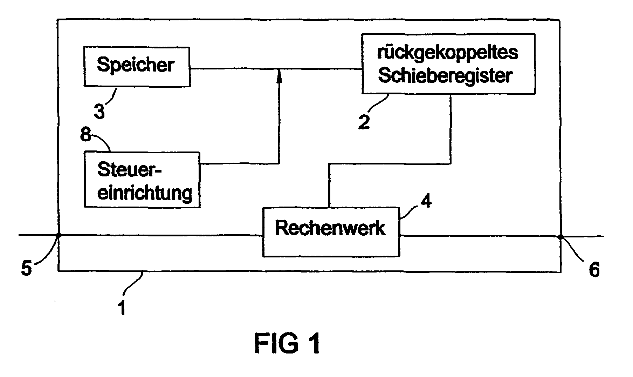

In Fig. 1 ist schematisch ein erstes Ausführungsbeispiel einer Challenge-Response-Vorrichtung 1 gezeigt. Die Challenge-Response-Vorrichtung 1 weist ein rückgekoppeltes Schieberegister 2 auf, das mit einem Speicher 3 verbunden ist. Das rückgekoppelte Schieberegister 2 ist ferner mit einem Rechenwerk 4 verbunden, das mit einem Eingang 5 zum Empfangen eines Challenge-Signals und einem Ausgang 6 zum Ausgeben eines Response-Signals verschaltet ist. Die Challenge-Response-Vorrichtung weist eine Steuereinrichtung 8 zum Steuern eines Anlegens von Daten von dem Speicher 3 an das rückgekoppelte Schieberegister 2 und Speicherns von Zuständen des rückgekoppelten Schieberegisters in dem Speicher 3 auf. Die Challenge-Response-Vorrichtung 1, die vorzugsweise eine Chipkarte ist, kann durch Herstellungsschritte, wie sie bei herkömmlichen Chipkarten bekannt sind, gebildet werden. Das Rechenwerk 4 stellt eine bekannte Komponente dar, die beispielsweise bei herkömmlichen Chipkarten verwendet wird. Der Speicher 3 ist vorzugsweise ein nichtflüchtiger Speicher, der beispielsweise einen E-PROM- oder E²-PROM-Speicher umfassen kann, wobei jedoch andere Typen von Speichern verwendet werden können. Das rückgekoppelte Schieberegister 2 stellt vorzugsweise ein Page-Register mit einer Bitlänge N dar, das einen zu- und abschaltbaren Rückkoppeleingang aufweist, um dasselbe wahlweise als ein rückgekoppeltes Schieberegister zu verwenden, wie es nachfolgend erklärt wird.

Die Verwendung eines Page-Registers mit einer zu- und abschaltbaren Rückkopplung ist aufgrund der Tatsache vorteilhaft, daß bei vielen Speichern ein solches Page-Register bereits vorhanden ist, so daß die Bereitstellung eines zusätzlichen rückgekoppelten Schieberegisters nicht erforderlich ist. Die Implementierung erfordert lediglich einige zusätzliche Gatter zur Schieberegisterrückkopplung, wodurch ferner eine aufwendige Übertragungslogik vermieden wird. Die Verschaltungen der Komponenten der Challenge-Response-Vorrichtung 1 sind mittels bekannter Technik durchgeführt. Der Eingang 5 und der Ausgang 6 sind derart ausgebildet, daß Challenge-Signale von einem Terminal, das nicht gezeigt ist, empfangen bzw. Response-Signale zu demselben übertragen werden können.

Das Terminal weist typischerweise einen Signalausgang zum Senden des Challenge-Signals, einen Signal-Eingang zum Empfangen des Response-Signals, ein Rechenwerk zum Berechnen des Vergleich-Response-Signal und eine Steuerung auf. Um einen Authentifikationsvorgang durchzuführen, gibt das Terminal über den Signal-Ausgang ein Challenge-Signal aus, das an dem Eingang 5 der Challenge-Response-Vorrichtung 1 empfangen wird und zu dem Rechenwerk 4 übertragen wird. Ansprechend auf das Challenge-Signal veranlaßt eine Steuereinrichtung 8, daß ein gespeicherter Wert einer Länge von N Bits, der bei der Initialisierung der Challenge-Response-Vorrichtung 1 in den Speicher 3 geschrieben wurde, zu dem rückgekoppelten Schieberegister 2 übertragen wird. Das rückgekoppelte Schieberegister 2 einer Länge von N Bits, das nach dem Empfangen einen Zustand aufweist, der dem gespeicherten Wert entspricht, wird um einen Takt inkrementiert, wodurch aus demselben mittels einer Verschiebung und Rückkopplung ein neuer Zustand des rückgekoppelten Schieberegisters 2 erzeugt wird.

Der neue Zustand des rückgekoppelten Schieberegisters 2 wird daraufhin zu dem Speicher 3 übertragen, wo derselbe als neuer Speicherwert gespeichert wird. Ferner wird der neue Zustand des rückgekoppelten Schieberegisters 2 zu dem Rechenwerk 4 übertragen. In dem Rechenwerk 4 wird unter Verwendung des neuen Zustands des rückgekoppelten Schieberegisters 2 und des Challenge-Signals ein Response-Signal berechnet. Bei einem weiteren Ausführungsbeispiel, das nachfolgend erklärt wird, erfolgt die Berechnung des Response-Signals unter Verwendung des neuen Zustands des rückgekoppelten Schieberegisters 2 zusammen mit weiteren Daten, die auf der Challenge-Response-Vorrichtung 1 gespeichert sind, wie beispielsweise einem geheimen Schlüssel, Personalisierdaten, Applikationsdaten usw. Nach einem Berechnen wird das Response-Signal zu dem Ausgang 6 weitergeleitet und zu dem Terminal übertragen.

Damit das Terminal in der Lage ist, die Korrektheit des übertragenen Response-Signals zu überprüfen, muß dasselbe in der Lage sein, ein Vergleich-Response-Signal zu berechnen und mit dem Response-Signal zu vergleichen. Dies kann beispielsweise dadurch erfolgen, daß der alte Zustand des rückgekoppelten Schieberegisters 2, der dem vorhergehenden Challenge-Response-Vorgang zugeordnet ist, zusammen mit dem Response-Signal oder zeitlich davor oder danach zu dem Terminal übertragen wird. Nachdem der alte Zustand des rückgekoppelten Schieberegisters 2 an dem Signal-Eingang des Terminals empfangen wird, wird eine Berechnung des Vergleich-Response-Signals durchgeführt. Dazu kann das Terminal selbst ein rückgekoppeltes Schieberegister aufweisen, um aus dem alten Schieberegisterzustand den neuen Schieberegisterzustand zu berechnen, oder der neue Schieberegisterzustand kann mit einer softwaremäßigen mit einem herkömmlichen Register oder Rechenwerk berechnet werden. Ferner besteht eine weitere Möglichkeit darin, anstelle des alten Schieberegisterzustands den in der Challenge-Response-Vorrichtung berechnete neue Schieberegisterzustand von der Challenge-Response-Vorrichtung zu dem Terminal mit bekannten Verfahren sicher zu übertragen, wodurch die Berechnung des neuen Schieberegisterzustands in dem Terminal nicht erforderlich ist.

Nachdem das Vergleich-Response-Signal berechnet ist, wird dasselbe mit dem übertragenen Response-Signal verglichen, wobei bei einer Übereinstimmung eine Freigabe durch das Terminal erteilt wird.

Die sukzessive erfindungsgemäße Verwendung des rückgekoppelten Schieberegisters 2 bei Challenge-Response-Vorgängen erzeugt eine Pseudozufallsfolge der Schieberegisterzustände. Die von einem rückgekoppelten Schieberegister 2 erzeugte Pseudo-Zufallsfolge ist deterministisch in dem Sinne, daß für einen bestimmten gespeicherten Anfangswert stets die gleiche Folge durchlaufen wird, wobei der Anfangswert derart gewählt werden kann, daß 2^{N} Zustände durchlaufen werden, bevor sich die Folge wiederholt. Die erfindungsgemäß erzeugte Folge erschwert einem potentiellen Angreifer jedoch die Durchführung von differentiellen Analysen und Manipulationen beträchtlich.

Zusätzlich ermöglicht die deterministische Eigenschaft der Folge, daß die Anzahl von Challenge-Vorgängen begrenzt wird, indem ein Anfangswert derart ausgewählt werden kann, daß nach einer vorbestimmten Anzahl ein gewählter Zustand des rückgekoppelten Schieberegisters 2 erreicht wird, bei dem veranlaßt wird, daß die Challenge-Response-Vorrichtung 1 gesperrt wird bzw. keine Authentifikation mehr freigegeben wird. Ein solcher Zustand kann beispielsweise derjenige sein, bei dem alle N Bits den Zustand 0 aufweisen. Dieses Merkmal stellt einen wichtigen Sicherheitsaspekt dar, da er einen Angriff eines betrügerischen Terminals auf lediglich eine bestimmte Anzahl von Authentifikationsvorgängen begrenzt, die derart gewählt ist, daß sie für die Benutzung der Challgenge-Response-Vorrichtung durch einen Benutzer ausreichend ist, während eine Analyse durch die begrenzte Anzahl von Challenge-Vorgängen erschwert ist. Ein Verfahren, das beispielsweise auf einer reinen Zufallszahlenfolge basiert, kann eine solche Begrenzung lediglich durch einen zusätzlichen Zähler liefern, der bei jedem Challenge-Vorgang weiterzählt, wobei dies einen erhöhten Raumverbrauch und einen aufwendigen Schaltungsaufbau erfordert.

Abgesehen davon, daß sich bei der vorliegenden Erfindung die Modifikation von Daten, die durch die Erzeugung eines neuen Zustands des rückgekoppelten Schieberegisters 2 erreicht wird, auf eine Weise ändert, die für den Benutzer nicht beeinflußbar ist bzw. nicht mehr im Detail durch das Terminal bestimmt ist, bietet die Verwendung des rückgekoppelten Schieberegisters 2 ferner den Vorteil, daß nicht nur ein vom Terminal vorgegebenes Bit den Zustand ändert, sondern im Mittel N/2 Bits verändert werden. Bei einem gleichen Challenge-Signal ändern sich folglich die zur Berechnung des Response-Signals verwendeten Daten von Authentifikation zu Authentifikation beträchtlich. Im Gegensatz zu anderen Verfahren wird dabei ein wesentlich geringerer Speicherraum benötigt, um eine Veränderung von N/2 Bits pro Challenge-Vorgang im Mittel zu erreichen.

Wie bereits erwähnt wurde kann durch eine geeignete Wahl der Rückkopplung das rückgekoppelte Schieberegister 2 ferner derart gestaltet werden, daß 2ⁿ verschiedene Zustände durchlaufen werden, bevor sich die Zählfolge wiederholt. Folglich ist der Speicherverbrauch, um nach einer vorgegebenen Anzahl von Authentifikationen eine Sperre zu bewirken, bei der Verwendung des rückgekoppelten Schieberegisters 2 gemäß der vorliegenden Erfindung deutlich geringer als bei der Verwendung anderer Vorrichtungen zur Modifikation von Daten, wie beispielsweise eines Zählers nach dem Abacus-Prinzip.

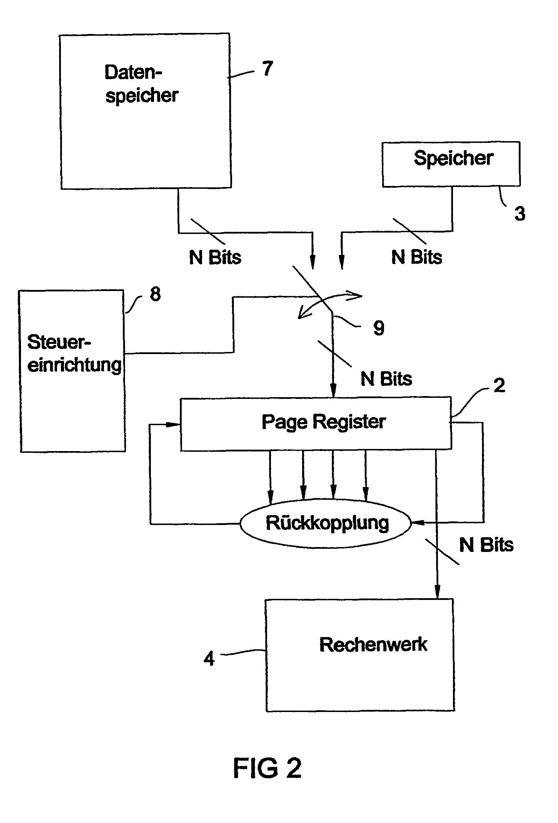

Fig. 2 stellt ein Blockschaltbild eines weiteren, bevorzugten Ausführungsbeispiels der vorliegenden Erfindung dar. Bei diesem Ausführungsbeispiel weist die Challenge-Response-Vorrichtung 1 ein rückgekoppeltes Schieberegister 2 auf, das aus einem Page-Register gebildet ist, das mit einem Rückkoppeleingang versehen ist. Die Rückkopplung erfolgt derart, daß Bits an einem Ausgang des Page-Registers "aus dem Register geschoben" werden und rückkopplungsmäßig mit den verbleibenden Bit-Zuständen in dem Page-Register gekoppelt werden, um neue Bitzustände zu erzeugen, die an einem Eingang in das Page-Register eingegeben werden. Wie bereits vorhergehend erwähnt wurde, ist die Verwendung eines Page-Registers aufgrund der Tatsache vorteilhaft, daß ein solches bei Speichern mit großer Kapazität in der Regel stets implementiert ist, wodurch eine separate Bereitstellung eines rückgekoppelten Schieberegisters nicht erforderlich ist. Bei dem beschriebenen Ausführungsbeispiel ist der Rückkoppeleingang zu- und abschaltbar, so daß das Page-Register wahlweise als solches als auch als ein rückgekoppeltes Schieberegister verwendet werden kann. Dies vermeidet einen zusätzlichen Flächenverbrauch, der im Fall eines separaten rückgekoppelten Schieberegisters notwendig wäre. Die Implementierung der Rückkopplung erfolgt dabei durch Festverdrahtung entsprechend bekannter Verfahren.

Bei dem beschriebenen Ausführungsbeispiel weist die Challenge-Response-Vorrichtung 1 ferner einen zusätzlichen Datenspeicher 7 auf, in dem Personalisierdaten, ein geheimer Schlüssel, Applikationsdaten und sonstige Daten gespeichert werden können. Obwohl bei diesem Ausführungsbeispiel der zusätzliche Datenspeicher 7 separat von dem Speicher 3 zum Speichern des Zustands des rückgekoppelten Schieberegisters 2 gezeigt ist, können die Daten, die in dem Speicher 3 und dem Datenspeicher 7 gespeichert sind, in einem Speicher gespeichert sein. Eine Steuereinrichtung 8 ist bei diesem Ausführungsbeispiel mit einem Schalter 9 verbunden, so daß wahlweise Daten aus dem Speicher 3 oder Daten aus dem Datenspeicher 7 in das Page-Register geladen werden können. Das Laden der Bits kann dabei sowohl auf eine serielle als auch auf eine parallele Weise erfolgen.

Wie bei dem ersten Ausführungsbeispiel ist ein Ausgang des Page-Registers 2 mit einem Rechenwerk 4 verbunden, das wiederum mit einem Eingang und einem Ausgang zum Übertragen von Signalen zu einem Terminal verbunden ist, die bei dem Blockschaltbild von Fig. 2 nicht gezeigt sind.

Ansprechend auf das Challenge-Signal, das von dem Terminal über den Eingang 5 empfangen wird, steuert die Steuereinrichtung 8 den Schalter 9 derart, daß der Wert des Speichers 3 in das Page-Register 2 gelesen wird. Das Page-Register 2, das durch Zuschaltung des Rückkopplungseingangs zu einem rückgekoppelten Schieberegister verschaltet wird, führt die Berechnung des neuen Registerzustands mittels der zugeschalteten Rückkopplung in dem Page-Register 2 durch, wie es vorhergehend erklärt wurde. Der neu erzeugte Zustand des Registers 2 wird als neuer Speicherwert in den Speicher 3 geschrieben und ferner zu dem Rechenwerk 4 übertragen. Daraufhin steuert die Steuerung 8 den Schalter 9 derart, daß ein geheimer Schlüssel und/oder Personalisierdaten oder weitere Daten über eine Zwischenspeicherung in dem nunmehr als Page-Register verschalteten Register 2 zu dem Rechenwerk 4 übertragen werden. Das Rechenwerk 4 berechnet unter Verwendung des Registerzustands, des geheimen Schlüssels und/oder den Personalisierdaten oder anderen Daten und dem Challenge-Signal das Response-Signal, das über den Ausgang zu dem Terminal übertragen wird.

Obwohl bei diesem Ausführungsbeispiel das Laden des Speicherwerts aus dem Speicher 3 in das rückgekoppelte Schieberegister 2 zeitlich gesehen vor einem Laden von Daten aus dem Datenspeicher 7 erfolgt, kann bei anderen Ausführungsbeispielen das Laden des Speicherwerts aus dem Speicher 3 zeitlich gesehen nach einem Übertragen der Daten aus dem Datenspeicher 7 über das Page-Register zu dem Rechenwerk 4 durchgeführt werden.

### Bezugszeichenliste

- 1: Challenge-Response-Vorrichtung
- 2: rückgekoppeltes Schieberegister
- 3: Speicher
- 4: Rechenwerk
- 5: Eingang
- 6: Ausgang
- 7: Datenspeicher
- 8: Steuereinrichtung
- 9: Schalter

## Patentansprüche

1. Challenge-Response-Vorrichtung (1) mit folgenden Merkmalen:
einem Eingang (5) zum Empfangen eines Challenge-Signals;
einem Ausgang (6) zum Ausgeben eines Response-Signals, wobei in einem Challenge-Response-Vorgang ein Response-Signal erzeugbar ist;
einem rückgekoppelten Schieberegister (2);
einem Speicher (3) zum Speichern eines Zustands des rückgekoppelten Schieberegisters (2);
**gekennzeichnet durch**
eine Einrichtung (8) zum Anlegen eines alten Schieberegisterzustands, der einem vorhergehenden Challenge-Response-Vorgang zugeordnet ist, an das rückgekoppelte Schieberegister (2), um aus einem alten Schieberegisterzustand einen neuen Schieberegisterzustand zu erhalten, der einem aktuellen Challenge-Response-Vorgang zugeordnet ist; und
ein Rechenwerk (4), das angeordnet ist, um in einem Challenge-Response-Vorgang unter Verwendung des Challenge-Signals und des Schieberegisterzustands, der dem aktuellen Challenge-Response-Vorgang zugeordnet ist, das Response-Signal für den aktuellen Challenge-Response-Vorgang zu berechnen.

2. Challenge-Response-Vorrichtung (1) gemäß Anspruch 1, bei der das rückgekoppelte Schieberegister (2) ein Page-Register mit einem zu- und abschaltbaren Rückkoppeleingang ist.

3. Challenge-Response-Vorrichtung (1) gemäß Anspruch 1 oder 2, bei der der Speicher (3) ein nichtflüchtiger Speicher ist.

4. Challenge-Response-Vorrichtung (1) gemäß einem der Ansprüche 1 bis 3, die ferner einen zusätzlichen Datenspeicher (7) zum Speichern geheimer Daten aufweist.

5. Challenge-Response-Vorrichtung (1) gemäß Anspruch 4, bei der das Rechenwerk (4) zum Berechnen des Response-Signals den Schieberegisterzustand, der dem aktuellen Challenge-Response-Vorgang zugeordnet ist, das Challenge-Signal und die geheimen Daten, die in dem Datenspeicher (7) gespeichert sind, verwendet.

6. Challenge-Response-Vorrichtung (1) gemäß Anspruch 4 oder 5, bei der die geheimen Daten einen geheimen Schlüssel umfassen.

7. Challenge-Response-Vorrichtung (1) gemäß einem der Ansprüche 1 bis 6, bei der das Rechenwerk (4) zum Berechnen des Response-Signals ferner kryptographische Algorithmen verwendet.

8. Challenge-Response-Vorrichtung (1) gemäß einem der Ansprüche 4 bis 7, bei der ein Einlesen aus dem Speicher (3) in das rückgekoppelte Schieberegister (2) zeitlich vor einem Übertragen von geheimen Daten in das Rechenwerk (4) erfolgt.

9. Challenge-Response-Vorrichtung (1) gemäß einem der Ansprüche 1 bis 8, bei der ein Zustand des rückgekoppelten Schieberegisters (2) derart ausgewählt ist, daß die Challenge-Response-Vorrichtung (1) nach einer vorbestimmten Anzahl von Challenge-Signalen einen vorbestimmten Zustand des rückgekoppelten Schieberegisters (2) erreicht, der ein Sperren der Challenge-Response-Vorrichtung (1) anzeigen kann.

10. Challenge-Response-Vorrichtung (1) gemäß einem der Ansprüche 1 bis 9, bei der die Challenge-Response-Vorrichtung eine Chipkarte ist.

11. Authentifikationssystem mit folgenden Merkmalen:
einer Challenge-Response-Vorrichtung (1) mit folgenden Merkmalen:
einem Eingang (5) zum Empfangen eines Challenge-Signals;
einem Ausgang (6) zum Ausgeben eines Response-Signals, wobei in einem Challenge-Response-Vorgang ein Respönse-Signal erzeugbar ist;
einem rückgekoppelten Schieberegister (2);
einem Speicher (3) zum Speichern eines Zustands des rückgekoppelten Schieberegisters (2);
einer Einrichtung (8) zum Anlegen eines alten Schieberegisterzustands, der einem vorhergehenden Challenge-Response-Vorgang zugeordnet ist, an das rückgekoppelte Schieberegister (2), um aus einem alten Schieberegisterzustand einen neuen Schieberegisterzustand zu erhalten, der einem aktuellen Challenge-Response-Vorgang zugeordnet ist; und
einem Rechenwerk (4), das angeordnet ist, um in einem Challenge-Response-Vorgang unter Verwendung des Challenge-Signals und des Schieberegisterzustands, der dem aktuellen Challenge-Response-Vorgang zugeordnet ist, das Response-Signal für den aktuellen Challenge-Response-Vorgang zu berechnen;
einem Terminal, das folgende Merkmale aufweist:
einen Signalausgang zum Ausgeben eines Challenge-Signals zu der Challenge-Response-Vorrichtung (1);
einen Signaleingang zum Empfangen eines Response-Signals von der Challenge-Response-Vorrichtung (1);
ein Rechenwerk, das ausgebildet ist, um unter Verwendung eines Challenge-Signals und in Kenntnis eines Zustands des rückgekoppelten Schieberegisters (2) das Response-Signal von der Challenge-Response-Vorrichtung (1) auf seine Korrektheit zu überprüfen;
eine Steuerung zum Steuern des Terminals, um ein Challenge-Signal an die Challenge-Response-Vorrichtung (1) auszugeben und das Response-Signal von der Challenge-Response-Vorrichtung (1) zu empfangen.

12. Verfahren zum Erzeugen eines Response-Signals aus einem Challenge-Signal mit folgenden Schritten:
Empfangen eines Challenge-Signals in einem Challenge-Response-Vorgang;
rückkopplungsmäßiges Erzeugen eines Zustands mit N Bits, der einem aktuellen Challenge-Response-Vorgang zugeordnet ist, aus einem rückkopplungsmäßig erzeugten Zustand, der einem vorhergehenden Challenge-Response-Vorgang zugeordnet ist;
Erzeugen eines Response-Signals aus dem Challenge-Signal und dem rückkopplungsmäßig erzeugten Zustand mit N Bits, der einem aktuellen Challenge-Response-Vorgang zugeordnet ist.

13. Verfahren zum. Durchführen einer Authentifikation mit folgenden Schritten:
Erzeugen eines Challenge-Signals in einem Terminal;
Übertragen des Challenge-Signals von dem Terminal zu einer Challenge-Response-Vorrichtung (1);
Empfangen des Challenge-Signals durch die Challenge-Response-Vorrichtung (1);
**gekennzeichnet durch** folgende Schritte:
rückkopplungsmäßiges Erzeugen eines Zustands mit N Bits, der einem aktuellen Challenge-Response-Vorgang zugeordnet ist, aus einem rückkopplungsmäßig erzeugten Zustand, der einem vorhergehenden Challenge-Response-Vorgang zugeordnet ist;
Erzeugen eines Response-Signals aus dem Challenge-Signal und dem rückkopplungsmäßig erzeugten Zustand mit N Bits, der einem aktuellen Challenge-Response-Vorgang zugeordnet ist;
Übertragen des Response-Signals von der Challenge-Response-Vorrichtung (1) zu dem Terminal;
Überprüfen des Response-Signals unter Verwendung des Challenge-Signals und in Kenntnis des Zustands mit N Bits, der einem aktuellen Challenge-Response-Vorgang zugeordnet ist.

## Claims

1. Challenge-response device (1) comprising:
an input (5) for receiving a challenge signal;
an output (6) for outputting a response signal, wherein a response signal is producible in a challenge-response operation;
a fed-back shift register (2);
a memory (3) for storing a state of the fed-back shift register (2);
**characterized by**:
an arithmetic unit (4) arranged so as to calculate, in a challenge-response operation, the response signal for the current challenge-response operation, using the challenge signal and the shift-register state associated with the current challenge-response operation.

2. Challenge-response device (1) as claimed in claim 1, wherein the fed-back shift register (2) is a page register with a connectable and disconnectable feedback input.

3. Challenge-response device (1) as claimed in claim 1 or 2, wherein the memory (3) is a non-volatile memory.

4. Challenge-response device (1) as claimed in any of claims 1 to 3, further comprising an additional data memory for storing secret data.

5. Challenge-response device (1) as claimed in claim 4, wherein the arithmetic unit (4) uses, for calculating the response signal, the shift-register state associated with the current challenge-response operation, the challenge signal and the secret data stored in the data memory (7).

6. Challenge-response device (1) as claimed in claim 4 or 5, wherein the secret data includes a secret key.

7. Challenge-response device (1) as claimed in any of claims 1 to 6, wherein the arithmetic unit (4) further uses cryptographic algorithms for calculating the response signal.

8. Challenge-response device (1) as claimed in any of claims 4 to 7, wherein a reading in from the memory (3) into the fed-back shift register (2) is effected, in temporal terms, before transmitting secret data into the arithmetic unit (4).

9. Challenge-response device (1) as claimed in any of claims 1 to 8, wherein a state of the fed-back shift register (2) is selected such that the challenge-response device ( 1 ) achieves, after a predetermined number of challenge signals, a predetermined state of the fed-back shift register (2), which state may indicate a disabling of the challenge-response device (1).

10. Challenge-response device (1) as claimed in any of claims 1 to 9, the challenge-response device being a chip card.

11. Authentication system comprising:
a challenge-response device (1) comprising:
an input (5) for receiving a challenge signal;
an output (6) for outputting a response signal, wherein a response signal is producible in a challenge-response operation;
a fed-back shift register (2);
a memory (3) for storing a state of the fed-back shift register (2);
means (8) for applying an old shift-register state, associated with a preceding challenge-response operation, to the fed-back shift register (2) so as to obtain, from an old shift-register state, a new shift-register state associated with a current challenge-response operation; and
an arithmetic unit (4) arranged so as to calculate, in a challenge-response operation, the response signal for the current challenge-response operation using the challenge signal and the shift-register state associated with the current challenge-response operation;
a terminal comprising:
a signal output for outputting a challenge signal to the challenge-response device (1);
a signal input for receiving a response signal from the challenge-response device (1);
an arithmetic unit configured so as to verify the response signal from the challenge-response device (1) with regard to its correctness, using a challenge signal and being aware of a state of the fed-back shift register (2);
a control for controlling the terminal so as to output a challenge signal to the challenge-response device (1) and to receive the response signal from the challenge-response device (1).

12. Method of producing a response signal from a challenge signal, comprising:
receiving a challenge signal in a challenge-response operation;
producing, by means of feedback, a state with N bits, which state is associated with a current challenge-response operation, from a state produced by means of feedback and associated with a preceding challenge-response operation;
producing a response signal from the challenge signal and from the state with N bits, produced by means of feedback and associated with a current challenge-response operation.

13. Method of performing an authentication, comprising:
producing a challenge signal in a terminal;
transmitting the challenge signal from the terminal to a challenge-response device (1);
receiving, on the part of the challenge-response device (1), the challenge signal;
**characterized by** the steps of:
producing, by means of feedback, a state with N bits, which state is associated with a current challenge-response operation, from a state produced by means of feedback and associated with a preceding challenge-response operation;
producing a response signal from the challenge signal and from the state with N bits, produced by means of feedback and associated with a current challenge-response operation;
transmitting the response signal from the challenge-response device (1) to the terminal;
verifying the response signal using the challenge signal and being aware of the state with N bits, which state is associated with a current challenge-response operation.

## Revendications

1. Dispositif d'identification forte (1), aux caractéristiques suivantes:
une entrée (5) destinée à recevoir un signal de défi;
une sortie (6) destinée à sortir un signal de défi, un signal de défi pouvant être généré dans une opération d'identification forte;
un registre de décalages couplé rétroactivement (2);
une mémoire (3) destinée à mémoriser un état du registre de décalages couplé rétroactivement (2);
**caractérisé par**
un moyen (8) destiné à appliquer au registre de décalages couplé rétroactivement (2) un ancien état de registre de décalages associé à une opération d'identification forte précédente, pour obtenir à partir d'un ancien état de registre de décalages un nouvel état de registre de décalages associé à une opération d'identification forte actuelle; et
un calculateur (4) qui est aménagé pour calculer dans une opération d'identification forte, à l'aide du signal de défi et de l'état de registre de décalages associé à l'opération d'identification forte actuelle, le signal de réponse pour l'opération d'identification forte actuelle.

2. Dispositif d'identification forte (1) selon la revendication 1, dans lequel le registre de décalages couplé rétroactivement (2} est un registre de pages avec une entrée de couplage rétroactif pouvant être enclenchée et déclenchée.

3. Dispositif d'identification forte (1) selon la revendication 1 ou 2, dans lequel la mémoire (3) est une mémoire non volatile.

4. Dispositif d'identification forte (1) selon l'une des revendications 1 à 3, présentant par ailleurs une mémoire de données additionnelle (7) destinée à mémoriser des données secrètes.

5. Dispositif d'identification forte (1) selon la revendication 4, dans lequel le calculateur (4) utilise, pour calculer le signal de réponse, l'état de registre de décalages associé à l'opération d'identification forte actuelle, le signal de défi et les données secrètes mémorisées dans la mémoire de données (7).

6. Dispositif d'identification forte (1) selon la revendication 4 ou 5, dans lequel les données secrètes comprennent une clé secrète.

7. Dispositif d'identification forte (1) selon l'une des revendications 1 à 6, dans lequel le calculateur (4) utilise, pour calculer le signal de réponse, par ailleurs des algorithmes cryptographiques.

8. Dispositif d'identification forte (1) selon l'une des revendications 1 à 7, dans lequel une lecture de la mémoire (3) vers le registre de décalages couplé rétroactivement (2) a lieu dans le temps avant une transmission de données secrètes vers le calculateur (4).

9. Dispositif d'identification forte (1) selon l'une des revendications 1 à 8, dans lequel un état du registre de décalages couplé rétroactivement (2) est sélectionné de sorte que le dispositif d'identification forte (1) atteint, après un nombre prédéterminé de signaux de défi, un état prédéterminé du registre de décalages couplé rétroactivement (2) qui peut indiquer un blocage du dispositif d'identification forte (1).

10. Dispositif d'identification forte (1) selon l'une des revendications 1 à 9, dans lequel le dispositif d'identification forte est une carte à puce.

11. Système d'authentification, aux caractéristiques suivantes:
un dispositif d'identification forte (1) aux caractéristiques suivantes:
une entrée (5) destinée à recevoir un signal de défi;
une sortie (6) destinée à sortir un signal de défi, un signal de défi pouvant être généré dans une opération d'identification forte;
un registre de décalages couplé rétroactivement (2);
une mémoire (3) destinée à mémoriser un état du registre de décalages couplé rétroactivement (2);
un moyen (8) destiné à appliquer au registre de décalages couplé rétroactivement (2) un ancien état de registre de décalages associé à une opération d'identification forte précédente, pour obtenir à partir d'un ancien état de registre de décalages un nouvel état de registre de décalages associé à une opération d'identification forte actuelle; et
un calculateur (4) qui est aménagé pour calculer dans une opération d'identification forte, à l'aide du signal de défi et de l'état de registre de décalages associé à l'opération d'identification forte actuelle, le signal de réponse pour l'opération d'identification forte actuelle;
un terminal présentant les caractéristiques suivantes:
une sortie de signal destinée à sortir un signal de défi vers le dispositif d'identification forte (1);
une entrée de signal destinée à recevoir un signal de réponse du dispositif d'identification forte (1);
un calculateur réalisé de manière à vérifier, à l'aide d'un signal de défi et en connaissance d'un état du registre de décalages couplé rétroactivement (2), le signal de réponse du dispositif d'identification forte (1) quant à sa correction;
une commande destinée à commander le terminal, pour sortir un signal de défi vers le dispositif d'identification forte (1) et pour recevoir le signal de réponse du dispositif d'identification forte (1).

12. Procédé pour générer un signal de réponse à partir d'un signal de défini, aux étapes suivantes consistant à:
recevoir un signal de défi dans une opération d'identification forte;
générer en couplage rétroactif un état à N bits associé à une opération d'identification forte actuelle à partir d'un état généré en couplage rétroactif associé à une opération d'identification forte précédente;
générer un signal de réponse à partir du signal de défi et de l'état à N bits généré en couplage rétroactif associé à une opération d'identification forte actuelle.

13. Procédé pour effectuer une authentification, aux étapes suivantes consistant à:
générer un signal de défi dans un terminal;
transmettre le signal de défi du terminal à un dispositif d'identification forte (1);
recevoir le signal de défi par le dispositif d'identification forte (1);
**caractérisé par** les étapes suivantes:
générer en couplage rétroactif un état à N bits associé à une opération d'identification forte actuelle à partir d'un état généré en couplage rétroactif associé à une opération d'identification forte précédente;
générer un signal de réponse à partir du signal de défi et de l'état à N bits généré en couplage rétroactif associé à une opération d'identification forte actuelle;
transmettre le signal de réponse du dispositif d'identification forte (1) au terminal;
vérifier le signal de réponse à l'aide du signal de défi et en connaissance de l'état à N bits associé à une opération d'identification forte actuelle.
